# EUROPEAN PATENT APPLICATION

(11) **EP 2 871 549 A2**
(43) Date of publication of application: **13.05.2015**
(21) Application number: 14187841.3
(22) Date of filing: 06.10.2014
(51) Int. Cl.: G05D 1/06

(54) **System and method for alerting of remaining runway upon landing based on deceleration**

(30) Priority: 06.11.2013 US 201314072899
(71) Applicant: Honeywell International Inc., Morristown, NJ 07962-2245 (US)
(72) Inventor: Ishihara, Yasuo, Morristown, NJ New Jersey 07962-2245 (US); Johnson, Steve, Morristown, NJ New Jersey 07962-2245 (US); Conner, Kevin J., Morristown, NJ New Jersey 07962-2245 (US)
(74) Representative: Houghton, Mark Phillip

(57) **Abstract**

A system and method are provided for alerting of remaining runway based on deceleration, following, for example, a landing or discontinued takeoff. An advisory system compares the current aircraft deceleration value to a predetermined threshold value when proceeding down the runway. If the current aircraft deceleration is less than the threshold value, the runway distance remaining callouts are triggered.

## Description

### TECHNICAL FIELD

The exemplary embodiments described herein generally relates to aircraft landing operations and more particularly to the rollout on the runway of the aircraft upon landing.

### BACKGROUND

Upon landing an aircraft on a runway, the ensuing deceleration and "roll out" of the aircraft can be challenging. In addition to visually maintaining the aircraft on the runway while braking during deceleration, the pilot must monitor instruments and interpret any voice messages received from air traffic control (ATC).

One of the major issues with known runway awareness and advisory system (RAAS) runway distance remaining callout functions is that they can occur during normal landing when not necessary. There have been many pilot reports that the distance remaining callouts voice over a critical ATC radio communication, making it difficult for the pilot to comprehend one or both. In known RAAS implementations, operators can select a callout trigger point based on 1) a fixed runway distance remaining, e.g., 3000 feet remaining; 2) a fixed runway distance from the approach end, e.g., 5000 feet from approach end; or 3) a percentage of the runway length, e.g., 25% of a runway length.

Many pilots tend to choose a smaller threshold to minimize the callouts occurring during a normal landing roll. However, if a small threshold value is selected, e.g., 2000 feet remaining, it may not provide timely information when the aircraft is still travelling at high speed and predicted to overrun the runway.

Accordingly, it is desirable to provide a system and method for providing a callout of remaining runway when deemed necessary. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A system and method are provided for providing the runway distance remaining as proceeding down a runway when the current aircraft deceleration value does not satisfy a predetermined threshold value.

In an exemplary embodiment, a system for managing the presentation of runway distance remaining for an aircraft on a runway, the system comprising an advisory system configured to determine the runway distance remaining; determine the current deceleration of the aircraft; and compare the current deceleration with respect to the runway distance remaining with a threshold; and a presentation system in operable communication with the advisory system and configured to provide the runway distance when the deceleration is less than the threshold.

In another exemplary embodiment, a system for managing the presentation of runway distance remaining for an aircraft, the system comprising an advisory system configured to determine the length of the runway upon which the aircraft is positioned; determine the runway distance from the aircraft to the end of the runway; determine the current deceleration of the aircraft; determine a threshold for a predetermined deceleration; and compare the current deceleration with respect to the runway distance remaining with the threshold; and a presentation system in operable communication with the advisory system and configured to provide the runway distance remaining when the deceleration is less than the threshold.

In yet another exemplary embodiment, a method for managing the presentation of runway distance remaining for an aircraft on a runway, comprises determining the runway distance remaining; determining the current deceleration of the aircraft; comparing the current deceleration with respect to the runway distance remaining with a threshold; and presenting the runway distance when the deceleration is less than the threshold.

### BRIEF DESCRIPTION OF THE DRAWINGS

The present invention will hereinafter be described in conjunction with the following drawing figures, wherein like numerals denote like elements, and
FIG. 1 is a block diagram of a known display system suitable for use in an aircraft in accordance with the exemplary embodiments described herein;
FIG. 2 is a diagram of an aircraft on a runway indicating the remaining distance to the end of the runway; and
FIG. 3 is a flow diagram of an exemplary method suitable for use with the display system of FIG. 1 in accordance with the exemplary embodiments.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

While the exemplary embodiments described herein refer to displaying the information on aircraft, the invention may also be applied to other vehicle display systems such as displays used by off-site controllers, e.g., ATC and ground controllers for drones.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Any of the above devices are exemplary, non-limiting examples of a computer readable storage medium.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

In accordance with the exemplary embodiments, an advisory system, for example a RAAS, compares the current aircraft deceleration value to a predetermined threshold value when proceeding down the runway. If the current aircraft deceleration is less than the threshold value, the runway distance remaining callouts are triggered. As used herein, a "callout" means a presentation of the runway distance remaining. The callout may be an audio presentation or a visual presentation. A predetermined deceleration threshold value is used instead of previously known systems using distance or percentage of runway length. The deceleration threshold value may be, for example, a value that the aircraft decelerates during a typical landing roll.

Additionally, if a runway overrun situation is predicted (the aircraft cannot stop before the end of the runway with the current level of deceleration), the runway distance remaining callouts can be triggered. As long as the aircraft is decelerating at an expected rate, the RAAS does not trigger the runway distance remaining callouts. Therefore, during a normal landing roll, pilots will not hear a runway distance remaining callout. If they hear callouts, they need to increase deceleration, for example, by apply brakes, thrust reverser, and/or spoilers, as deceleration is less than the deceleration threshold.

The comparison of the current aircraft deceleration value with the threshold may be periodically performed. If the deceleration increases above the threshold, the callouts would cease. However, if the deceleration decreases below the threshold again, the callouts would resume. This periodic comparison may also consider whether the current deceleration will stop the aircraft by the end of the runway.

Known systems silence distance remaining callouts when the aircraft decelerates through 40 knots. However, in accordance with the exemplary embodiments, the callouts may be provided based on the deceleration regardless of speed.

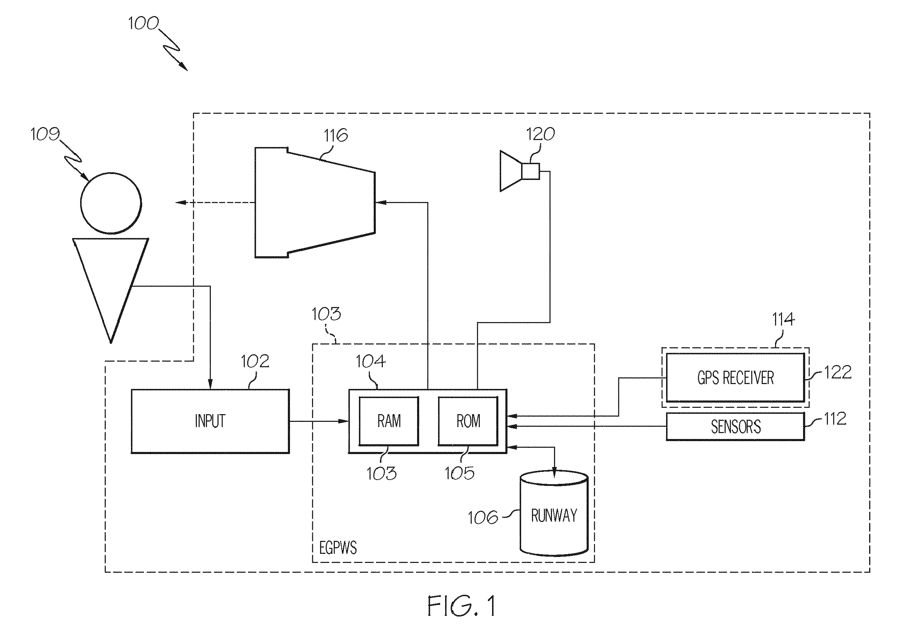

Referring to FIG. 1, an exemplary flight deck system 100 is depicted and will be described for providing alerts to a pilot within an aircraft. The system 100 includes a user interface 102, an enhanced ground proximity warning system 103 (EGPWS) including a processor 104 and one or more runway databases 106, various optional sensors 112, various external data sources 114, a display device 116, and a speaker 120 for providing audio alerts. It is understood that the EGPWS 103 includes software sometimes referred to as a runway awareness and advisory system (RAAS). In some embodiments, the user interface 102 and the display device 116 may be combined in the same device, for example, a touch pad. The user interface 102 is in operable communication with the EGPWS 103 and is configured to receive input from a user 109, e.g., a pilot, and, in response to the user input, supply command signals to the processor 104. The user interface 102 may be any one, or combination, of various known user interface devices including, but not limited to, a cursor control device, such as a mouse, a trackball, or joystick, and/or a keyboard, one or more buttons, switches, or knobs.

The processor 104 may be any one of numerous known general-purpose microprocessors or an application specific processor that operates in response to program instructions. In the depicted embodiment, the processor 104 includes on-board RAM (random access memory) 103, and on-board ROM (read only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. It will be appreciated that this is merely exemplary of one scheme for storing operating system software and software routines, and that various other storage schemes may be implemented. It will also be appreciated that the processor 104 may be implemented using various other circuits, not just a programmable processor. For example, digital logic circuits and analog signal processing circuits could also be used.

No matter how the processor 104 of the EGPWS 103 is specifically implemented, it is in operable communication with the runway databases 106, and the display device 116, and is coupled to receive various types of inertial data from the various sensors 112 and various other avionics-related data from the external data sources 114. The processor 104 is configured, in response to the inertial data and the avionics-related data, to selectively retrieve runway data from one or more of the runway databases 106 and to supply appropriate display commands to the display device 116. The display device 116, in response to the display commands from the processor 104 selectively renders various types of textual, graphic, and/or iconic information. The preferred manner in which the textual, graphic, and/or iconic information are rendered by the display device 116 will be described in more detail further below. Before doing so, however, a brief description of the databases 106, the sensors 112, and the external data sources 114, at least in the depicted embodiment, will be provided.

The runway databases 106 include various types of data representative of the surface over which the aircraft is taxing, the terrain over which the aircraft is flying, and available runways. It will be appreciated that, although the runway databases 106 and the navigation databases 108 are, for clarity and convenience, shown as being stored separate from the processor 104, all or portions of the databases 106 could be loaded into the RAM 103, or integrally formed as part of the processor 104, and/or RAM 103, and/or ROM 105. The runway databases 106 could also be part of a device or system that is physically separate from the system 100.

The sensors 112 may be implemented using various types of inertial sensors, systems, and or subsystems, now known or developed in the future, for supplying various types of inertial data. The inertial data may also vary, but preferably include data representative of the state of the aircraft such as, for example, aircraft speed, heading, altitude, and attitude. The number and type of external data sources 114 may also vary. For example, the external systems (or subsystems) may include, for example, a navigation computer. However, for ease of description and illustration, only a global position system (GPS) receiver 122 is depicted in FIG. 1.

The display device 116, as noted above, in response to display commands supplied from the processor 104, selectively renders various textual, graphical, and/or iconic information, and thereby supply visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display device 116 may additionally be implemented as a panel mounted display, a HUD (head-up display) projection, or any one of numerous known technologies. It is additionally noted that the display device 116 may be configured as any one of numerous types of aircraft flight deck displays. For example, it may be configured as a multi-function display, a horizontal situation indicator, or a vertical situation indicator, just to name a few.

In operation, the system 100 is also configured to process the current flight status data for the ownship. In this regard, the sources of flight status data generate, measure, and/or provide different types of data related to the operational status of the ownship, the environment in which the ownship is operating, flight parameters, and the like. In practice, the sources of flight status data may be realized using line replaceable units (LRUs), transducers, accelerometers, instruments, sensors, and other well-known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display system 100 is suitably designed to process data obtained from the sources of flight status data in the manner described in more detail herein.

It should be understood that FIG. 1 is a simplified representation of a display system 100 for purposes of explanation and ease of description, and FIG. 1 is not intended to limit the application or scope of the subject matter in any way. In practice, the system 100 and/or aircraft 202 will include numerous other devices and components for providing additional functions and features, as will be appreciated in the art.

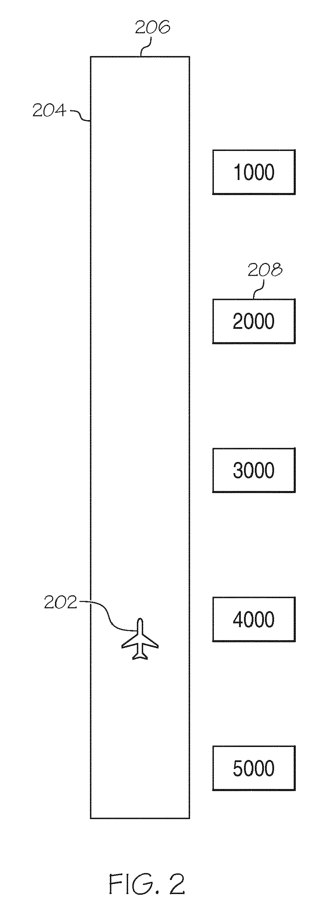

Referring to FIG. 2, an aircraft 202 is shown on the runway 204 after, for example, landing, aborting a takeoff, or simply taxiing. The remaining runway distance to the departure end 206 of the runway 204 is typically displayed on a plurality of signs 208 alongside of the runway 204. A pilot may refer to the signs 208 on the side of the runway 204 for reference in determining how quickly the aircraft must decelerate. However, there are times when the pilot is busy attending to other duties, for example, maintaining control of the aircraft, monitoring instruments, and listening to radio traffic, and cannot devote the necessary time required to note each sign 208 upon passing. Furthermore, distance remaining signs may not exist at a particular runway, and weather such as low visibility or snow may impede the ability to see the signs.

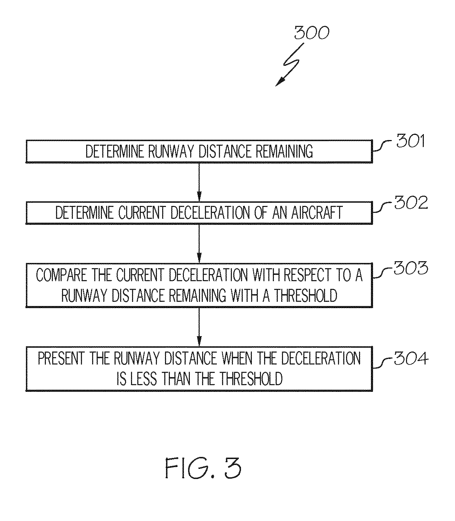

The exemplary embodiments described herein present a vocal or visual display of the remaining distance when the current aircraft deceleration does not reach a threshold as described in the flow chart of FIG. 3. The position of the aircraft 202 is determined by one of several means, for example, the external data sources 114. Data about the runway, including location and length is provided from the runway database 106. The RAAS within the EGPWS 103 determines the remaining runway distance based on the aircraft's position and the length of the runway.

The ground speed is determined, for example, by the external data sources 114 and/or sensors 112, and the change in ground speed (deceleration) is determined by, for example, an external data source 114 such as an inertial reference system (not shown). A threshold deceleration is predetermined as the typical deceleration for the aircraft 202. The RAAS compares the deceleration with the threshold, and when the deceleration is less than the threshold, callouts of the distance remaining are provided, typically at each 1000 foot remaining point. Alert callouts are provided by the speaker 120 and an optional visual display of the remaining distance would be provided by the display 116. If the deceleration exceeds the threshold at any point, the callouts may be ceased.

Additionally in another exemplary embodiment, the RAAS determines whether the aircraft will be able to stop by the end of the runway at the current deceleration. If not, the callouts of the remaining runway distance are provided, thereby letting the pilot know that increased braking of the aircraft 202 must be initiated.

FIG. 3 is a flow chart that illustrates an exemplary embodiment of a method 300 suitable for use with RAAS described herein. Method 300 represents one implementation of a method for displaying aircraft approaches or departures on an onboard display of a host aircraft. The various tasks performed in connection with method 300 may be performed by software, hardware, firmware, or any combination thereof. For illustrative purposes, the following description of method 300 may refer to elements mentioned above in connection with preceding FIGS. In practice, portions of method 300 may be performed by different elements of the described system, e.g., a processor, a display element, or a data communication component. It should be appreciated that method 300 may include any number of additional or alternative tasks, the tasks shown in FIG. 3 need not be performed in the illustrated order, and method 300 may be incorporated into a more comprehensive procedure or method having additional functionality not described in detail herein. Moreover, one or more of the tasks shown in FIG. 3 could be omitted from an embodiment of the method 300 as long as the intended overall functionality remains intact.

More specifically, in accordance with the exemplary method of FIG. 3, a method for managing the presentation of runway distance remaining for an aircraft on a runway, comprises determining the runway distance remaining, determining the current deceleration of the aircraft, comparing the current deceleration with respect to the runway distance remaining with a threshold, and presenting the runway distance when the deceleration is less than the threshold.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A system for managing the presentation of runway distance remaining for an aircraft on a runway, the system comprising:
an advisory system configured to:
determine the runway distance remaining;
determine the current deceleration of the aircraft; and
compare the current deceleration with respect to the runway distance remaining with a threshold; and
a presentation system in operable communication with the advisory system and configured to provide the runway distance when the deceleration is less than the threshold.

2. The system of claim 1 wherein the advisory system is further configured to:
determining whether the aircraft will be able to stop by the end of the runway at the current deceleration; and
wherein the presentation system is further configured to:
presenting the runway distance if the aircraft will not be able to stop by the end of the runway at the current deceleration.

3. The system of claim 1 wherein the presentation system comprises a speaker configured to:
aurally present the remaining distance.

4. The system of claim 1 wherein the presentation system comprises a display configured to:
display the remaining distance.

5. The system of claim 1 wherein the advisory system is further configured to:
periodically determined the runway distance remaining.

6. The system of claim 1 wherein the advisory system is further configured to:
determine the threshold that has been determined from a compilation of typical aircraft decelerations.

7. A method for managing the presentation of runway distance remaining for an aircraft on a runway, comprising:
determining the runway distance remaining;
determining the current deceleration of the aircraft;
comparing the current deceleration with respect to the runway distance remaining with a threshold; and
presenting the runway distance when the deceleration is less than the threshold.

8. The method of claim 7 further comprising:
determining whether the aircraft will be able to stop by the end of the runway at the current deceleration; and
presenting the runway distance if the aircraft will not be able to stop by the end of the runway at the current deceleration.

9. The method of claim 7 wherein the presenting the runway distance comprises:
aurally presenting the remaining distance.

10. The method of claim 7 wherein the presenting the runway distance comprises:
displaying the remaining distance.

11. The method of claim 7 wherein the runway distance remaining is periodically determined.

12. The method of claim 7 further comprising:
determining the threshold that has been determined from a compilations of typical aircraft decelerations.
